# FASCICULE DE BREVET EUROPEEN

(11) **EP 1 512 891 B1**
(45) Date de publication et mention de la délivrance du brevet: **06.06.2012**
(21) Numéro de dépôt: 04300463.9
(22) Date de dépôt: 23.07.2004
(51) Int. Cl.: F16H 57/04, F16N 7/36

(54) **Réservoir additionnel de lubrification pour boîte de vitesses**
Zusatzbehälter für den Schmierstoff eines Getriebes
Supplementary tank for lubricant for gear box

(30) Priorité: 25.07.2003 FR 0309109
(43) Date de publication de la demande: 09.03.2005
(73) Titulaire: Renault s.a.s., 92100 Boulogne Billancourt (FR)
(72) Inventeur: Fouquet, Guillaume, 27370 Saint Cyr la Campagne (FR); Germain, Arnaud, 91120 Palaiseau (FR); Petit, Sébastien, 27920 Saint Etienne sous Bailleul (FR)

(56) Documents cités:
- FR-A- 2 744 508
- FR-A- 2 751 726
- JP-A- 2002 054 729
- US-A- 4 222 283

## Description

La présente invention concerne un agencement pour la lubrification d'un train d'engrenages.

Plus précisément, elle concerne un réservoir additionnel de lubrification pour boîte de vitesses disposé au dessus des pignons, de manière à lubrifier au moins un train d'engrenages par aspersion d'huile récupérée à partir des projections d'une couronne dentée, telle que la couronne de différentiel.

Elle trouve une application non limitative sur une boîte de vitesses mécanique à cinq rapports de marche avant, dont les pignons du cinquième rapport, contenus dans un compartiment séparé du carter principal de la boîte par une cloison intermédiaire, posent un problème de lubrification particulier.

Par la publication FR 2751 726, on connaît un réservoir additionnel de lubrification disposé au dessus des paires de pignons, et comportant des trous d'évacuation formés à des hauteurs différentes dans sa paroi latérale pour asperger les paires de pignons.

Un tel réservoir additionnel ne permet pas de garantir en toutes circonstances la lubrification du train d'engrenages présent dans le compartiment séparé du carter. En effet, aux faibles vitesses de rotation de la couronne du différentiel, le jet de lubrifiant traversant l'orifice ne tombe pas toujours sous l'effet de la gravité sur le couple de pignons mais coule le long de la paroi externe de la goulotte jusqu'à ce qu'il atteigne la paroi intermédiaire du carter sur laquelle il ruisselle. Il a aussi été constaté qu'à ces vitesses et pour une viscosité élevée du lubrifiant, l'huile poursuit son trajet le long de la paroi interne de la goulotte de déversement, sans s'écouler par l'orifice d'évacuation.

Le document JP 2002 054729 présente un réservoir additionnel de lubrification disposé au dessus des pignons d'une boite de vitesse, et comportant une paroi de guidage de l'huile permettant également de limiter le débit de l'huile. Cette paroi freine le débit pour assurer le dépôt de débris dans une partie formant réservoir.

Dans ces configurations, la lubrification du train d'engrenages du compartiment n'est pas assurée, et il en résulte un grippage de la denture de ces pignons.

La présente invention vise à assurer en toutes circonstances une bonne lubrification de tous les pignons d'une boîte de vitesses, notamment d'une boîte de vitesses comportant une paire de pignons logés dans un comportement d'extrémité séparé du reste du carter par une cloison intermédiaire.

Grâce à l'invention, la lubrification de la paire de pignons isolée dans un compartiment séparé est assurée, tout en conservant une bonne lubrification des autres zones de la boîte, en particulier celles qui doivent bénéficier de la lubrification du réservoir additionnel.

L'invention vise notamment à garantir un jet continu de lubrifiant sur le train d'engrenages du compartiment séparé, quel que soit le régime de rotation de la couronne du différentiel et quelle que soit la température de l'huile,

D'une manière générale, elle propose des moyens de contrôle du flux d'huile déversé sur au moins un train d'engrenages de la boîte, notamment pour le ralentissement du flux d'huile,

De préférence, ces moyens sont associés à un couloir d'alimentation et à un orifice d'aspersion du train d'engrenages.

Selon un mode de réalisation particulier de l'invention, le couloir d'alimentation est délimité par une paroi latérale et un barrage d'extrémité ralentissent le flux d'huile vers l'orifice d'aspersion.

D'autres caractéristiques et avantages de l'invention apparaîtront clairement à la lecture de la description suivante d'un mode de réalisation particulier de celle-ci, en liaison avec les dessins annexés, sur lesquels:
- la figure 1 est une vue extérieure du mécanisme d'une boîte de vitesses équipée du réservoir additionnel de l'invention, et
- les figures 2A et 2B sont respectivement des vues de dessus et de dessous du réservoir proposé.

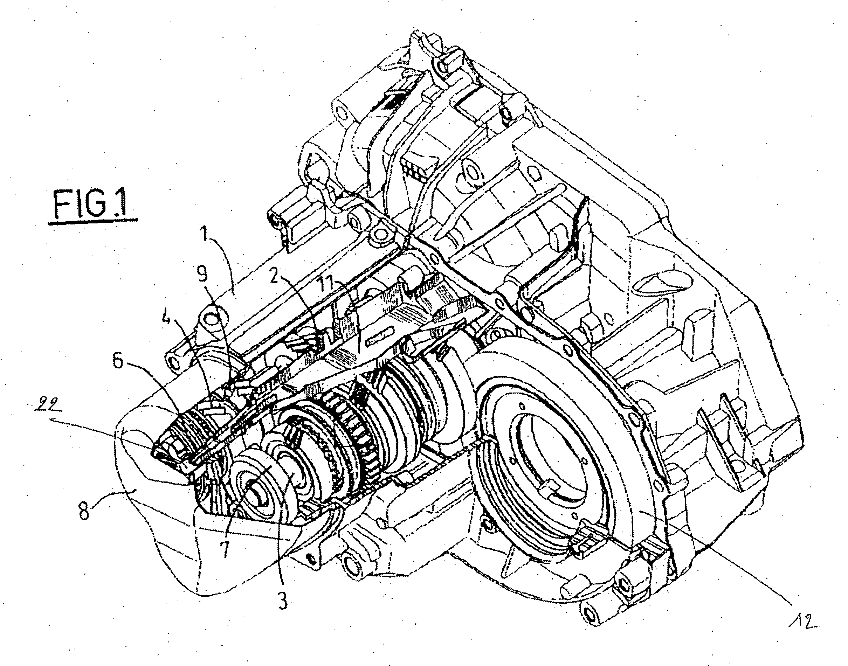

Sur la figure 1, on a représenté à l'intérieur du carter de mécanisme 1, d'une boîte de vitesses à arbres parallèles 2, 3, les principaux éléments de ce mécanisme, dont quatre pignons fixes solidaires de l'arbre primaire 2, et les pignons fous correspondants avec leurs moyens de crabotage empilés sur l'arbre secondaire 3, Dans cette boîte, dont l'architecture spécifique ne limite pas la portée de l'invention, l'arbre primaire porte un pignon fou particulier 4, isolé avec ses moyens de synchronisation et de crabotage 6, et le pignon fixe correspondant 7 de l'arbre secondaire 3, dans un compartiment 8 séparé du reste du carter 1 par une cloison intermédiaire 9.

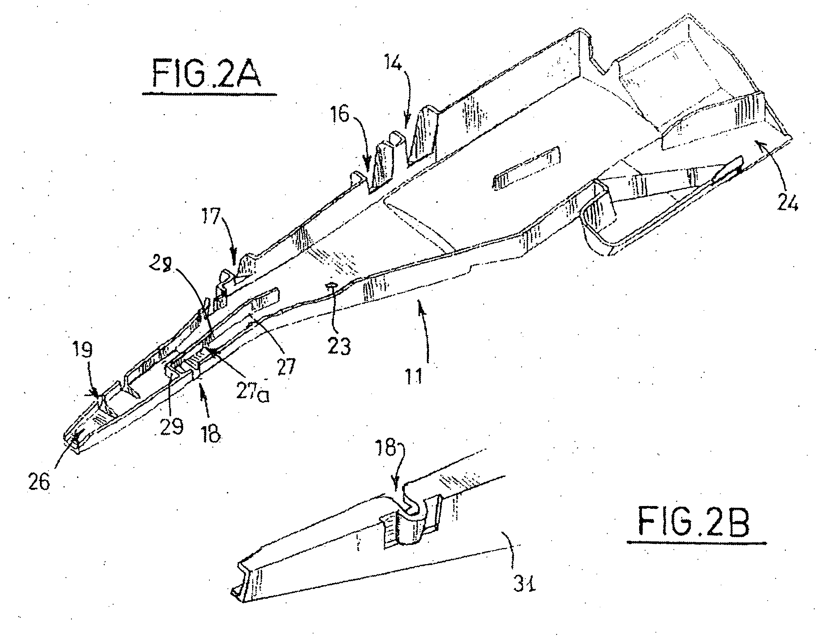

Le réservoir 11 est disposé au dessus des pignons. Ce réservoir, reproduit sur les figures 2A et 2B, est alimenté par les projections d'huile de la couronne de différentiel 12, Il possède six orifices de déversement 14, 16, 17, 18, 19, 21 aspergeant respectivement les pignons fixes de deuxième, troisième, quatrième et cinquième, et les patins de fourchette de cinquième dans leurs deux positions vitesse engagée et vitesse non engagée. Une canule 22 permet la lubrification de l'alésage du pignon fou de cinquième 4, et un orifice 23 permet le ruissellement de l'huile vers le roulement de l'arbre secondaire.

Le réservoir 11 possède également une rampe d'alimentation 24, par rotation de la couronne de différentiel 12 qui trempe en permanence dans le réservoir principal de lubrifiant du carter 1. Enfin, le réservoir 11 présente un orifice d'alimentation 26 de la canule 22 permettant la lubrification de l'alésage du pignon fou de cinquième 4.

Conformément à l'invention, le déversoir 11 présente des moyens de ralentissement du flux d'huile déversé sur un train d'engrenages. Ces moyens de ralentissement sont associés à un couloir d'alimentation 27 et à l'orifice de déversement 18 pour l'aspersion du pignon fixe de cinquième 7. Le couloir 27 est délimité par une paroi latérale 28 et par un barrage d'extrémité 29 ralentissant le flux d'huile vers l'orifice 18.

Comme indiqué sur les figures, l'orifice d'aspersion ou de déversement 18 se présente sous la forme d'un bec de déversement orienté transversalement au couloir 27.

Par ailleurs, la pente d'écoulement du couloir peut avantageusement être diminuée dans sa partie d'extrémité précédant l'orifice d'aspersion, de manière à ralentir le flux d'huile en direction du bec, par exemple à partir d'une ligne de rupture de pente 27a mise en évidence sur la figure 2A, et permettant ainsi un meilleur contrôle de la direction du jet d 'huile sur le couple de pignons, quelles que soient la température et la vitesse du lubrifiant.

Enfin, la figure 2B montre que la base 31 du réservoir 11 est découpée autour du bec 18, de manière à éviter l'écoulement des gouttes de lubrifiant le long de celui-ci et à améliorer l'orientation du jet de lubrifiant sur la denture du train d'engrenages.

Dans le mode de réalisation non limitatif illustré par les figures, le couloir d'alimentation et les moyens de ralentissement sont associés à un orifice de déversement sur le pignon fixe du dernier train d'engrenages de la botte à l'opposé de l'embrayage, isolé dans un compartiment séparé du reste du carter par une cloison intermédiaire. Le couloir d'alimentation et les moyens de ralentissement sont donc ici associés à un orifice de déversement sur le train d'engrenages isolé dans un compartiment séparé du carter. Toutefois, sans sortir du cadre de l'invention, ces moyens peuvent être associés à plus d'une seule descente d'engrenages, ou à d'autres pignons ou éléments de commande de passage ou de synchronisation, disposés ou non dans un compartiment séparé du carter. En d'autres termes, la boîte de vitesses et le réservoir illustré par les figures n'ont aucun caractère limitatif quand au nombre et à l'emplacement des moyens de déversement et de contrôle du flux d'huile proposés.

## Revendications

1. Réservoir additionnel de lubrifiant (11) pour boîte de vitesses disposé au dessus des pignons de la boîte, de manière à lubrifier les pignons par aspersion de l'huile récupéré à partir des projections d'une couronne dentée (12) présentant des moyens de ralentissement (28, 29) du flux d'huile déversé au moins sur un train d'engrenages (4,7) par un orifice d'aspersion (18),
**caractérisé en ce que**
les moyens de contrôle sont constitués d'un couloir d'alimentation (27) délimité par une paroi latérale (28), par un barrage d'extrémité (29) situés à l'intérieur du réservoir (11) et par une paroi du réservoir (11), l'orifice (18) étant situé dans la paroi du réservoir en amont du barrage d'extrémité (29).

2. Réservoir selon la revendication 1, **caractérisé en ce que** l'orifice d'aspersion (18) se présente sous la forme d'un bec de déversement orienté transversalement au couloir d'alimentation (27).

3. Réservoir selon la revendication 2 **caractérisé en ce que** la pente d'écoulement du couloir (27) est diminuée dans sa partie (27a) d'extrémité précédant l'orifice d'aspersion (18),

4. Réservoir selon l'une des revendications 2 ou 3, **caractérisé en ce que** sa base (31) est découpée autour de l'orifice (18), de manière a éviter l'écoulement des gouttes de lubrifiant le long de celui-ci et à améliorer l'orientation du jet de lubrifiant sur la denture du train d'engrenages (4,7).

5. Réservoir selon l'une des revendications précédentes, **caractérisé en ce que** le couloir d'alimentation (27) et les moyens de ralentissement (28, 29) sont associés à l'orifice, de déversement sur le pignon fixe du dernier train d'engrenages (4, 7) de la boîte.

6. Réservoir selon l'une des revendications précédentes, **caractérisé en ce que** couloir d'alimentation (27) et les moyens de ralentissement (28, 29) sont associés l'orifice de déversement (18) sur un train d'engrenages (4, 7) isolé dans un compartiment séparé du reste du carter (1).

## Claims

1. Supplementary tank (11) for lubricant of a gearbox placed above the pinions of the gearbox so as to lubricate the pinions by sprinkling oil retrieved from the splashes from a crown wheel (12) having means (28, 29) for slowing down the flow of oil poured at least onto one gear train (4, 7) through a sprinkling orifice (18), **characterized in that** the control means consist of a supply passageway (27) delimited by a side wall (28), by an end dam (29) situated inside the tank (11) and by a wall of the tank (11), the orifice (18) being situated in the wall of the tank that is upstream of the end dam (29).

2. Tank according to Claim 1, **characterized in that** the sprinkling orifice (18) takes the form of a pouring spout oriented transversely to the supply passageway (27).

3. Tank according to Claim 2, **characterized in that** the slope of flow of the passageway (27) is reduced in its end portion (27a) preceding the sprinkling orifice (18).

4. Tank according to one of Claims 2 and 3, **characterized in that** its base (31) is cut away around the orifice (18) so as to prevent drops of lubricant flowing along the latter and to improve the orientation of the jet of lubricant on the teeth of the gear train (4, 7).

5. Tank according to one of the preceding claims, **characterized in that** the supply passageway (27) and the slowing means (28, 29) are associated with the orifice for pouring onto the fixed pinion of the last gear train (4, 7) of the gearbox.

6. Tank according to one of the preceding claims, **characterized in that** the supply passageway (27) and the slowing means (28, 29) are associated with the orifice (18) for pouring onto a gear train (4, 7) that is isolated in a compartment separate from the rest of the housing (1).

## Patentansprüche

1. Schmiermittel-Zusatzbehälter (11) für ein Getriebe, der über den Getrieberädern des Getriebes angeordnet ist, um die Getrieberäder durch Benetzen mit dem Öl zu schmieren, das ausgehend von den Spritzern eines Zahnkranzes (12) wiedergewonnen wird, der Einrichtungen zur Verlangsamung (28, 29) des Ölflusses aufweist, der mindestens auf ein Räderwerk (4, 7) durch eine Benetzungsöffnung (18) gegossen wird, **dadurch gekennzeichnet, dass**
die Steuereinrichtungen aus einem Zufuhrkanal (27) bestehen, der von einer Seitenwand (28), von einer Endabsperrung (29), die sich im Inneren des Behälters (11) befinden, und von einer Wand des Behälters (11) begrenzt wird, wobei die Öffnung (18) sich in der Wand des Behälters vor der Endabsperrung (29) befindet.

2. Behälter nach Anspruch 1, **dadurch gekennzeichnet, dass** die Benetzungsöffnung (18) die Form einer Ausgießnase hat, die quer zum Zufuhrkanal (27) ausgerichtet ist.

3. Behälter nach Anspruch 2, **dadurch gekennzeichnet, dass** die Fließneigung des Kanals (27) in seinem Endbereich (27a) vor der Benetzungsöffnung (18) verringert ist.

4. Behälter nach einem der Ansprüche 2 oder 3, **dadurch gekennzeichnet, dass** seine Basis (31) um die Öffnung (18) herum ausgeschnitten ist, um das Fließen der Schmiermitteltropfen entlang dieser zu vermeiden und die Ausrichtung des Schmiermittelstrahls auf die Zahnung des Räderwerks (4, 7) zu verbessern.

5. Behälter nach einem der vorhergehenden Ansprüche, **dadurch gekennzeichnet, dass** der Zufuhrkanal (27) und die Verlangsamungseinrichtungen (28, 29) der Ausgießöffnung auf dem ortsfesten Getrieberad des letzten Räderwerks (4, 7) des Getriebes zugeordnet sind.

6. Behälter nach einem der vorhergehenden Ansprüche, **dadurch gekennzeichnet, dass** der Zufuhrkanal (27) und die Verlangsamungseinrichtungen (28, 29) der Ausgießöffnung (18) auf einem isolierten Räderwerk (4, 7) in einem vom Rest des Gehäuses (1) getrennten Abteil zugeordnet sind.
